# FASCICULE DE BREVET EUROPEEN

(11) **EP 3 436 308 B1**
(45) Date de publication et mention de la délivrance du brevet: **16.06.2021**
(21) Numéro de dépôt: 17709138.6
(22) Date de dépôt: 09.02.2017
(51) Int. Cl.: B60R 1/06

(54) **EMBASE DE RETROVISEUR EXTERIEUR AVEC CACHE INTERCHANGEABLE**
MONTAGESOCKEL EINES AUSSENSPIEGELS MIT AUSTAUSCHBARER BLENDE
MOUNTING BASE FOR EXTERNAL MIRROR WITH EXCHANGEABLE COVER

(30) Priorité: 31.03.2016 FR 1652794
(43) Date de publication de la demande: 06.02.2019
(73) Titulaire: PSA Automobiles SA, 78300 Poissy (FR)
(72) Inventeur: FIGENT, Michel, 25260 Longevelle Sur Doubs (FR); SENECOT, Gilles, 78580 Bazemont (FR); BUREAU, Pascal, 78830 Bullion (FR)
(86) Numéro de dépôt international: PCT/FR2017/050302
(87) Numéro de publication internationale: WO 2017/168060

(56) Documents cités:
- EP-A1- 0 644 084
- FR-A1- 2 975 352
- US-A1- 2002 048 100
- US-A1- 2005 083 596
- US-A1- 2012 235 009

## Description

L'invention a trait au domaine des rétroviseurs extérieurs de véhicule automobile. Un véhicule automobile comprend généralement des rétroviseurs extérieurs montés sur la carrosserie. Un rétroviseur extérieur comprend généralement une embase configurée pour être fixée à la porte du véhicule. L'embase est un élément structurel du rétroviseur généralement recouvert par un cache. Le cache de l'embase forme une partie visible du rétroviseur.

Le document de brevet US 2002/048100 divulgue un embase de rétroviseur extérieur pour porte avant de véhicule automobile, comprenant un corps avec une portion étendue et une portion support du rétroviseur; un cache destiné à recouvrir le corps; Le cache comprend une portion inférieure et une portion supérieure, la portion supérieure comprenant une face intérieure destinée à être en vis-à-vis de la portion étendue du corps et comprenant des moyens de fixation par vissage aptes à coopérer avec au moins une vis de fixation traversant ladite portion étendue du corps.

Le document de brevet EP 1 326 764 B1 divulgue une embase de rétroviseur extérieur pour porte avant de véhicule automobile et qui comprend un corps avec une portion étendue apte à être fixée à une zone généralement verticale de la porte du véhicule et une portion support du rétroviseur. L'embase de rétroviseur extérieur comprend aussi un cache qui est destiné à recouvrir la portion étendue du corps et qui y est fixé par un système comprenant un élément en saillie sur la face interne du cache et destiné à s'engager par coulissement dans une languette sur le corps. Cette fixation n'offre cependant pas une stabilité satisfaisante.

Sur un véhicule actuel, le rétroviseur extérieur participe au style du véhicule, le matériau et la couleur du rétroviseur sont par exemple des éléments du rétroviseur qui peuvent être choisis de manière optionnelle à l'achat du véhicule par exemple pour différentier la gamme du véhicule ou bien pour s'accorder à la couleur du véhicule. La modularité de tels rétroviseurs entraine la conception d'éléments interchangeables qui peuvent être disposés généralement rapidement sur le rétroviseur sur une ligne de montage ou en atelier de pré montage. Les éléments interchangeables des rétroviseurs sont cependant sensiblement vulnérables à l'arrachage en cas de tentative de vol.

L'invention a pour objectif de proposer une solution palliant au moins un inconvénient de l'état de la technique, en particulier de l'état de la technique ci-dessus mentionné. Plus particulièrement, l'invention a pour objectif de proposer une solution satisfaisante pour assurer une fixation modulaire d'un cache sur une embase de rétroviseur extérieur.

L'invention a pour objet une embase de rétroviseur extérieur pour porte avant de véhicule automobile, comprenant : un corps avec une portion étendue apte à être fixée à une zone généralement verticale de la porte du véhicule, et une portion support du rétroviseur ; un cache destiné à recouvrir le corps ; remarquable en ce que le cache comprend une portion inférieure et une portion supérieure, la portion supérieure comprenant une face intérieure destinée à être en vis-à-vis de la portion étendue du corps et comprenant des moyens de fixation par vissage aptes à coopérer avec au moins une vis de fixation traversant ladite portion étendue du corps.

Selon un mode avantageux de l'invention, les moyens de fixation par vissage comprennent un fût de réception de la ou de chacune des vis de fixation, respectivement ; la portion étendue du corps comprend un orifice de réception de la ou de chacune desdites vis, respectivement, depuis une face intérieure de ladite portion en vis-à-vis de la zone généralement verticale de la porte du véhicule.

Avantageusement, le ou chacun des fûts de réception de la ou des vis de fixation est en saillie sur la face intérieure de la portion supérieure du cache.

Selon un mode avantageux de l'invention, la portion étendue du corps comprend une face de contact et de fixation avec la zone généralement verticale de la porte du véhicule, le ou les orifices de réception de la ou des vis de fixation étant en retrait de ladite face suivant une direction perpendiculaire à un plan moyen de ladite face.

Selon un mode avantageux de l'invention, les moyens de fixation par vissage sont situés sur une moitié supérieure de la portion supérieure du cache.

Selon un mode avantageux de l'invention, la portion supérieure comprend, en outre, des moyens de fixation par emboîtement et/ou clippage avec la portion inférieure.

Selon un mode avantageux de l'invention, la portion supérieure du cache comprend un bord inférieur destiné à être adjacent à un bord supérieur de la portion inférieure, les moyens de fixation par emboîtement et/ou clippage étant situés au niveau desdits bords et étant configurés pour permettre un pivotement de la portion supérieure par rapport à la portion inférieure autour desdits bords alors que les moyens de fixation par vissage ne sont pas engagés.

Selon un mode avantageux de l'invention, la portion supérieure du cache est généralement triangulaire.

Selon un mode avantageux de l'invention, la portion supérieure du cache forme une paroi généralement étendue avec un retour le long d'un bord, ledit retour s'étendant suivant une extension depuis un coin de ladite paroi.

Avantageusement, le retour sur l'extension de la portion supérieure forme une rainure apte à coopérer avec une nervure sur la portion inférieure du cache.

Avantageusement, le retour sur l'extension de la portion supérieure comprend une languette apte à se loger dans une fente correspondante sur la nervure.

Selon un mode avantageux de l'invention, la portion inférieure est configurée pour entourer la portion support du corps.

Avantageusement, la portion supérieure présente une surface extérieure visible qui se prolonge avec la surface correspondante de la portion inférieure du cache.

Avantageusement, la portion supérieure du cache est montée sur la portion inférieure du cache par un mouvement vertical ou essentiellement vertical.

L'invention a également pour objet un véhicule automobile avec au moins une porte avant, un rétroviseur extérieur et une embase dudit rétroviseur fixée à ladite porte, remarquable en ce que l'embase est conforme à l'invention, ladite embase étant configurée pour que le démontage de la portion supérieure du cache impose la dépose de l'embase afin de pouvoir accéder à la ou les vis de fixation de ladite portion sur la face intérieure de la portion étendue du corps de l'embase.

Avantageusement, la portion supérieure du cache comprend un bord avant incliné longeant un montant supérieur de cadre de fenêtre du véhicule.

Les mesures de l'invention sont intéressantes en ce que l'embase est conçue pour assurer la sécurité de la fixation du cache du rétroviseur tout en rendant ce cache interchangeable. En effet, le cache du corps de l'embase comprend une portion supérieure interchangeable qui est vissée au corps.

D'autres caractéristiques et avantages de la présente invention seront mieux compris à l'aide de la description et des dessins parmi lesquels :
- La figure 1 est une vue en perspective de l'extérieur d'un rétroviseur extérieur monté sur un véhicule automobile conforme à l'invention ;
- La figure 2 est une vue d'une embase du rétroviseur extérieur de la figure 1 ;
- La figure 3 est une vue de l'embase de la figure 2, la portion supérieure de ladite embase étant retirée ;

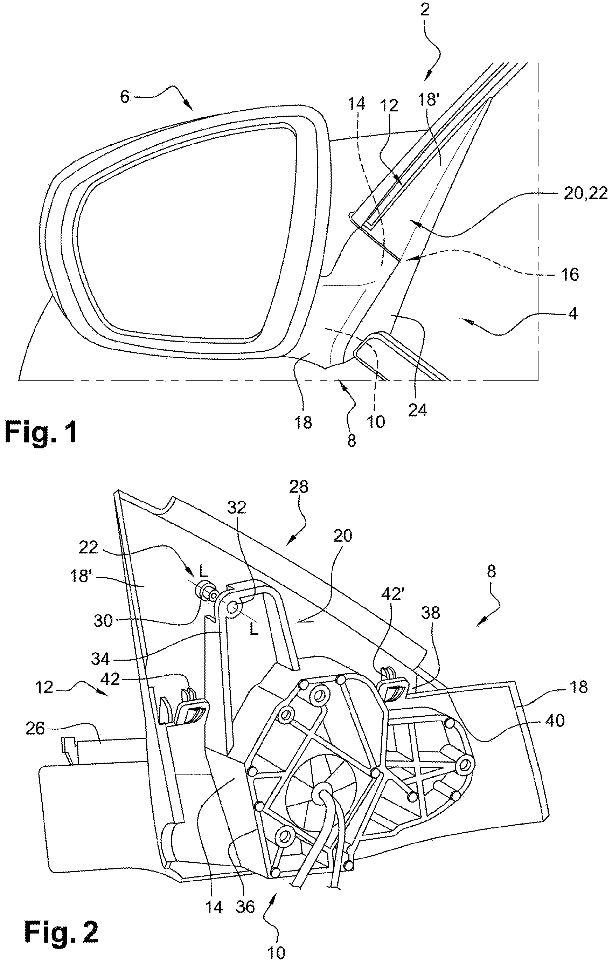

La figure 1 est une vue en perspective d'un véhicule automobile 2 conforme à l'invention. Le véhicule automobile 2 comprend une porte avant 4 et un rétroviseur extérieur 6 fixé sur la porte avant. Le rétroviseur 6 comprend une embase 8 et est fixé à la porte via ladite embase. Le rétroviseur comprend aussi un boîtier de logement du miroir du rétroviseur. Le boîtier de logement du miroir peut être monté pivotant sur l'embase. L'embase 8 comprend un corps 10 ainsi qu'un cache 12 recouvrant le corps. Le corps comprend une portion étendue 14 qui est fixée à une zone 16 généralement verticale de la porte 4 du véhicule 2. Le cache 12 comprend une portion inférieure 18, dont une partie seulement est visible, ainsi qu'une portion supérieure 18' qui est une partie interchangeable du cache. La portion supérieure 18' comprend une face intérieure 20 qui est en vis-à-vis de la portion étendue 14 du corps et qui comprend des moyens de fixation 22 par vissage coopérant avec au moins une vis de fixation traversant la portion étendue 14 du corps 10. L'embase 8 est ainsi configurée pour que le démontage de la portion supérieure 18' du cache impose la dépose de l'embase 8 afin de pouvoir accéder à la vis de fixation de la portion supérieure du cache sur la portion étendue du corps. Dans le mode de réalisation particulier de l'invention ici présenté, la portion supérieure 18' du cache comprend un bord avant incliné qui longe un montant supérieur de cadre de vitre du véhicule. On peut aussi voir que la portion supérieure du cache est de forme triangulaire avec un coin en bas et vers l'arrière de la forme en triangle à partir duquel ladite portion comprend une extension 24 qui en l'occurrence chevauche un montant inférieur du cadre de vitre du véhicule. On peut observer que la portion supérieure 18' du cache présente une surface extérieure visible qui se prolonge avec la surface correspondante de la portion inférieure du cadre.

La figure 2 est une vue de l'intérieur du véhicule de l'embase 8 de rétroviseur extérieur conforme à l'invention et représenté détaché du véhicule. On peut voir au premier plan de la figure la portion étendue 14 du corps 10 de l'embase 8 qui est apte à être fixée sur la zone généralement verticale de la porte du véhicule. En arrière de la portion étendue 14 du corps et en bas de l'image, on peut voir la portion inférieure 18 du cache. On peut aussi voir en arrière-plan que le corps 10 comprend une portion support 26 du rétroviseur, et la portion inférieure 18 du cache est configurée pour entourer la portion support 26 du rétroviseur. On peut également voir, à la figure 2, la portion supérieure 18' du cache. C'est la face intérieure 20 de la portion supérieure du cache que l'on peut voir sur l'image, face intérieure qui est en vis-à-vis de portion étendue 14 du corps. On peut voir les moyens de fixation 22 par vissage de la portion supérieure du cache avec le corps. Dans un mode particulier de réalisation de l'invention, les moyens de fixation par vissage peuvent comprendre plusieurs vis de fixation, ils comprennent en l'occurrence une unique vis de fixation. En l'absence de représentation de la vis sur l'image, on peut voir représenté l'axe L de fixation par vis entre la portion supérieure 18' du cache et la portion étendue 14 du corps. Les moyens de fixation 22 par vissage sont situés sur une moitié supérieure 28 de la portion supérieure 18' du cache. En particulier, les moyens de fixation par vissage comprennent un fût 30 de réception de la vis de fixation en saillie sur la face intérieure de la portion supérieure du cache. Les moyens de fixation par vissage comprennent aussi sur la portion étendue 14 du corps un orifice 32 de réception de la vis. On peut voir la face intérieure 34 de la portion étendue 14 du corps 10 de l'embase 8 destinée à être en vis-à-vis de la zone généralement verticale de la porte du véhicule, et la vis de fixation (non représentée) est destinée à s'engager, depuis cette face, dans l'orifice 32 de la portion étendue de corps avant de se loger dans le fût 30 de fixation sur le cache. La portion étendue 14 du corps comprend aussi une face 36 de contact et de fixation avec la zone généralement verticale de la porte du véhicule ; cette face s'étend dans un plan moyen et l'orifice 32 de réception de la vis qui est sur la portion étendue du corps est en retrait de la face de contact 36 suivant une direction perpendiculaire au plan moyen en question. En l'occurrence, le bord de l'orifice est en contact avec le fût de fixation sur la portion supérieure du cache. Cette mesure de l'invention est intéressante en ce que le vissage peut assurer une fixation pérenne.

On va s'attacher dans le paragraphe suivant à décrire des moyens de fixation supplémentaires de la portion supérieure 18' du cache 12 sur l'embase 8.

La portion supérieure 18' du cache 12 comprend un bord inférieur 38 qui est adjacent à un bord supérieur 40 de la portion inférieure 18 du cache et la portion supérieure 18' comprend, en outre, des moyens de fixation 42 et 42' par emboîtement et/ou par clippage avec la portion inférieure, moyens qui sont situés au niveau du bord inférieur 38. En particulier, ces moyens de fixation supplémentaire peuvent être configurés pour permettre un pivotement de la portion supérieure par rapport à la portion inférieure autour des bords 38 et 40 alors que les moyens de fixation par vissage 22 ne sont pas engagés.

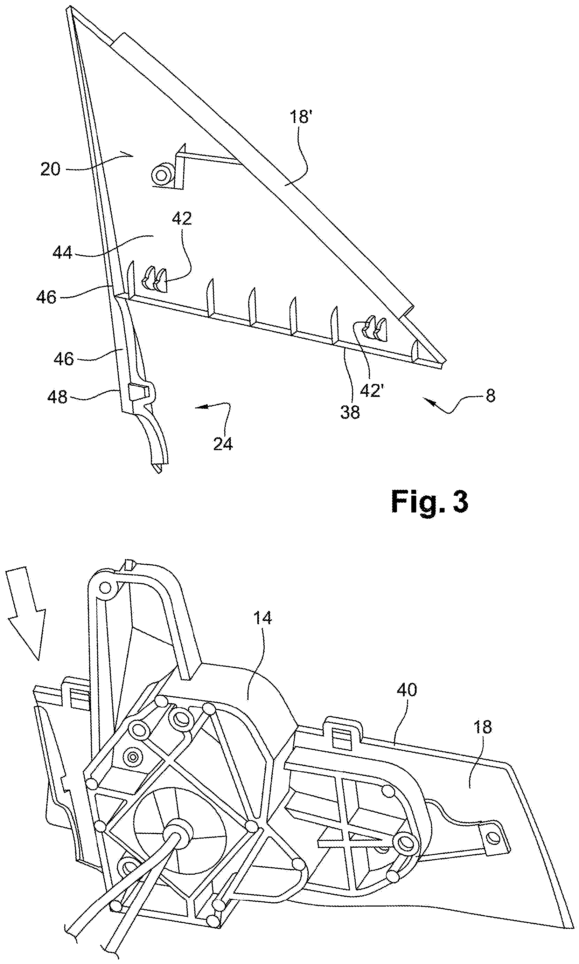

La figure 3 est une vue de l'embase 8 de rétroviseur conforme à l'invention, la portion supérieure 18' du cache étant représentée séparée de l'embase. On peut voir l'image du haut de la figure qui représente la portion supérieure 18' du cache avec la face intérieure 20 destiné à être en vis-à-vis de la portion étendue du corps. On reconnait la forme en triangle de cette portion supérieure 18' ainsi que l'extension 24 de la portion supérieure introduite en référence avec la figure 1. On peut observer que la portion supérieure du cache forme une paroi 44 qui est généralement étendue et qui comprend un coin (à gauche sur l'image) depuis lequel s'étend l'extension 24. La paroi comprend un retour 46 le long d'un bord 48 qui est suivant cette extension 24. Cette mesure de l'invention est intéressante en ce qu'elle permet de réduire la possibilité d'agripper un outil d'arrachement de l'extension en cas de tentative de vol de la portion supérieure 18' interchangeable. En l'occurrence, le retour 46 de la paroi située sur l'extension 24 de la portion supérieure 18' forme une rainure apte à coopérer avec une nervure sur la portion inférieure du cache. Le retour sur l'extension peut, en outre, comprendre une languette apte à se loger dans une fente correspondante sur la nervure. On peut voir sur l'image du bas de la figure la portion étendue 14 du corps de l'embase 8 ainsi que la portion inférieure du cache de l'embase. Dans un mode particulier de l'invention ici représenté, la portion supérieure 18' du cache peut être montée sur la portion inférieure 18 du cache par un mouvement généralement vertical selon la flèche illustrée sur la figure ou essentiellement vertical. Lors de ce montage, les moyens de de fixation 42 et 42' au niveau du bord inférieur 38 de la portion supérieure 18' viennent s'engager avec des œillets de forme complémentaire au niveau du bord supérieur 40 de la portion inférieure 18 du cache. En outre, lors de ce montage, la languette sur l'extension 24 de la portion supérieure peut venir s'engager dans la fente correspondant sur la portion inférieure du cache.

## Revendications

1. Embase (8) de rétroviseur extérieur (6) pour porte avant (4) de véhicule automobile (2), comprenant :
- un corps (10) avec
∘ une portion étendue (14) apte à être fixée à une zone (16) généralement verticale de la porte (4) du véhicule, et
∘ une portion support (26) du rétroviseur ;
- un cache (12) destiné à recouvrir le corps (10) le cache forme une partie visible du rétroviseur.
**caractérisée en ce que**
le cache (12) comprend une portion inférieure (18) et une portion supérieure (18'), la portion supérieure comprenant une face intérieure (20) destinée à être en vis-à-vis de la portion étendue (14) du corps et comprenant des moyens de fixation (22) par vissage aptes à coopérer avec au moins une vis de fixation traversant ladite portion étendue (14) du corps.

2. Embase (8) selon la revendication 1, **caractérisée en ce que** les moyens de fixation (22) par vissage comprennent un fût (30) de réception de la ou de chacune des vis de fixation, respectivement ; la portion étendue (14) du corps comprend un orifice (32) de réception de la ou de chacune desdites vis, respectivement, depuis une face intérieure (34) de ladite portion en vis-à-vis de la zone (16) généralement verticale de la porte (4) du véhicule.

3. Embase (8) selon la revendication 2, **caractérisée en ce que** la portion étendue (14) du corps comprend une face (36) de contact et de fixation avec la zone (16) généralement verticale de la porte du véhicule, le ou les orifices (32) de réception de la ou des vis de fixation étant en retrait de ladite face suivant une direction perpendiculaire à un plan moyen de ladite face.

4. Embase (8) selon l'une des revendications 1 à 3, **caractérisée en ce que** les moyens de fixation (22) par vissage sont situés sur une moitié supérieure (28) de la portion supérieure (18') du cache (12).

5. Embase (8) selon l'une des revendications 1 à 4, **caractérisée en ce que** la portion supérieure (18') du cache (12) comprend, en outre, des moyens de fixation (42 ; 42') par emboîtement et/ou clippage avec la portion inférieure (18).

6. Embase (8) selon la revendication 5, **caractérisée en ce que** la portion supérieure (18') du cache (12) comprend un bord inférieur (38) destiné à être adjacent à un bord supérieur (40) de la portion inférieure (18), les moyens de fixation (42, 42') par emboîtement et/ou clippage étant situés au niveau desdits bords et étant configurés pour permettre un pivotement de la portion supérieure (18') par rapport à la portion inférieure (18) autour desdits bords alors que les moyens de fixation (22) par vissage ne sont pas engagés.

7. Embase (8) selon l'une des revendications 1 à 6, **caractérisée en ce que** la portion supérieure (18') du cache (12) est généralement triangulaire.

8. Embase (8) selon la revendication 7, **caractérisée en ce que** la portion supérieure (18') du cache (12) forme une paroi (44) généralement étendue avec un retour (46) le long d'un bord (48), ledit retour s'étendant suivant une extension (24) depuis un coin (46) de ladite paroi.

9. Embase (8) selon l'une des revendications 1 à 8, **caractérisée en ce que** la portion inférieure (18) du cache (12) est configurée pour entourer la portion support (26).

10. Véhicule automobile (2) avec au moins une porte avant (4), un rétroviseur extérieur (6) et une embase (8) dudit rétroviseur fixée à ladite porte, **caractérisé en ce que** l'embase (8) est conforme à l'une des revendications 1 à 9, ladite embase étant configurée pour que le démontage de la portion supérieure (18') du cache (12) impose la dépose de l'embase (8) afin de pouvoir accéder à la ou les vis de fixation de ladite portion sur la face intérieure (34) de la portion étendue (14) du corps (10) de l'embase.

## Patentansprüche

1. Außenrückblickspiegelsockel (8) für eine Vordertür (4) eines Kraftfahrzeugs (2) mit
- einem Körper (10) mit
o einem erweiterten Abschnitt (14), der an einem im Allgemeinen vertikalen Bereich (16) der Fahrzeugtür (4) befestigbar ist, und
o ein Stützteil (26) des Spiegels,
- eine Abdeckung (12) zur Abdeckung des Körpers (10), wobei die Abdeckung (12) einen sichtbaren Teil des Spiegels bildet;
Die Abdeckung (12) umfasst einen unteren Abschnitt (18) und einen oberen Abschnitt (18'), wobei der obere Abschnitt eine Innenfläche (20) aufweist, die dem verlängerten Abschnitt (14) des Körpers gegenüberliegend angeordnet ist, und Schraubbefestigungsmittel (22) aufweist, die geeignet sind, mit mindestens einer Befestigungsschraube zusammenzuwirken, die den verlängerten Abschnitt des Körpers durchsetzt.

2. Sockel (8) nach Anspruch 1, **dadurch gekennzeichnet, dass** die Schraubbefestigungsmittel (22) einen Schaft (30) zur Aufnahme der bzw. jeder der Befestigungsschrauben umfassen; Der verlängerte Körperabschnitt (14) umfasst eine Öffnung (32) zur Aufnahme der oder jeder der Schrauben jeweils von einer Innenseite (34) des Körperabschnitts, die dem allgemein vertikalen Bereich (16) der Fahrzeugtür (4) gegenüberliegt.

3. Sockel (8) nach Anspruch 2, **dadurch gekennzeichnet, dass** der verlängerte Abschnitt (14) des Körpers eine Fläche (36) zum Berühren und Befestigen mit dem im Allgemeinen vertikalen Bereich (16) der Fahrzeugtür umfasst, wobei die Öffnung(en) zur Aufnahme der Befestigungsschraube(en) von der Fläche in einer Richtung senkrecht zu einer Mittelebene der Fläche zurückgesetzt ist (sind).

4. Sockel (8) nach einem der Ansprüche 1 bis 3, **dadurch gekennzeichnet, dass** die Befestigungsmittel (22) durch Verschrauben auf einer oberen Hälfte (28) des oberen Abschnitts (18') der Abdeckung (12) angeordnet sind.

5. Sockel (8) nach einem der Ansprüche 1 bis 4, **dadurch gekennzeichnet, dass** der obere Abschnitt (18') der Abdeckung (12) ferner Befestigungsmittel (42; 42') durch Einstecken und/oder Einklinken mit dem unteren Teil (18).

6. Sockel (8) nach Anspruch 5, **dadurch gekennzeichnet, dass** der obere Abschnitt (18') der Abdeckung (12) einen unteren Rand (38) aufweist, der an einen oberen Rand (40) des unteren Abschnitts (18) angrenzt, wobei die Befestigungsmittel (42, 42') durch Einstecken und/oder Einklemmen an den Rändern angeordnet sind und so ausgebildet sind, dass sie eine Drehen des oberen Teils (18') relativ zum unteren Teil (18) um die Ränder, während die Befestigungsmittel (22) durch Schrauben nicht in Eingriff sind.

7. Sockel (8) nach einem der Ansprüche 1 bis 6, **dadurch gekennzeichnet, dass** der obere Abschnitt (18') der Abdeckung (12) im Allgemeinen dreieckig ist.

8. Sockel (8) nach Anspruch 7, **dadurch gekennzeichnet, dass** der obere Abschnitt (18') der Abdeckung (12) eine im Allgemeinen ausgefahrene Wand (44) bildet, die mit einem Rücklauf (46) entlang einer Kante (48) verläuft, wobei der Rücklauf sich entlang einer Verlängerung (24) von einer Ecke (46) der Wand erstreckt.

9. Sockel (8) nach einem der Ansprüche 1 bis 8, **dadurch gekennzeichnet, dass** der untere Abschnitt (18) der Abdeckung (12) so ausgebildet ist, dass er den Trägerabschnitt (26) umgibt.

10. Kraftfahrzeug (2) mit mindestens einer Vordertür (4), einem Außenspiegel (6) und einem Sockel (8) des Spiegels, der an der Tür befestigt ist, **dadurch gekennzeichnet, dass** die Basis (8) einem der Ansprüche 1 bis 9 entspricht, wobei die Basis so konfiguriert ist, dass das Demontieren des oberen Abschnitts (18') der Abdeckung (12) das Absetzen der Basis (8) bewirkt (34) des verlängerten Teils (14) des Grundkörpers (10) zugänglich ist.

## Claims

1. Base (8) of outside mirror (6) for front door (4) of motor vehicle (2), including:
- a body (10) with
o an extended portion (14) capable of being fixed to an area (16) generally vertical of the door (4) of the vehicle, and
o a bracket portion (26) of the rearview mirror;
- a cover (12) intended to cover the body (10), the cover(12) forms a visible part of the rearview mirror;
characterized as cover (12) consists of a lower portion (18) and an upper portion (18'), the upper portion consisting of an inner face (20) intended to be opposite the extended portion (14) of the body and including means of fastening (22) per tightening capable of co-operating with at least one fastening screw passing through that extended portion (14)) of the body.

2. Base (8) according to Claim 1, characterized that the means of fastening (22) per tightening include a barrel (30) of receipt of the bolt(s) of each of the fastening screws, respectively; the extended portion (14) of the body consists of an opening (32) of reception of the screw(s), respectively, from an inner face (34) of the screw facing the area (16) generally vertical of the door (4) of the vehicle.

3. Base (8) according to Claim 2, **characterized in that** the extended portion (14) of the body includes a face (36) of contact and fastening with the zone (16) generally vertical of the door of the vehicle, the orifices (32) of receipt of the screw(s) of fastening being removed from the face by a direction perpendicular to a plane tool the face.

4. Base (8) according to one of claims 1 to 3, characterized as means of fastening (22) per tightening are located on one upper half (28) of the upper portion (18') of the cover (12).

5. Base (8) according to one of the claims 1 to 4, **characterized by** the fact that the upper portion (18') of the cover (12) also includes means of fastening (42; 42') by interlocking and/or clipping with the lower portion (18).

6. Base (8) according to Claim 5, characterized as the upper portion (18') of the cover (12) includes a lower edge (38) intended to be adjacent to an upper edge (40) of the lower portion (18), the means of fastening (42, 42') by interlocking and/or clipping being located at the same edge and configured to allow the upper portion to rotate (18') in relation to the lower portion (18) around the said edges, while the means of fastening (22) per tightening are pitch engaged.

7. Base (8) according to one of claims 1 to 6, **characterized by** the fact that the upper portion (18') of the cover (12) is generally triangular.

8. Base (8) according to Claim 7, characterized as the upper portion (18') of the cover (12) forms a wall (44) generally extended with a return (46) along a edge (48), the said return extending from an extension (24) from a corner (46) of the said wall.

9. Base (8) according to one of claims 1 to 8, characterized as the lower portion (18) of the cover (12) is configured to surround the bracket portion (26).

10. Motor vehicle (2) with at least one front door (4), one outside mirror (6) and one base (8) of the said rearview mirror set out in the said door, characterized that base (8) complies with one of the claims 1 to 9, the said base being configured to remove the upper portion (18') of the cover (12) requiring the deposit of the base (18') 8) in order to be able to access the screw(s) of the attachment of that portion on the inner face (34) of the extended portion (14) of the body (10) of the base.
